# FASCICULE DE BREVET EUROPEEN

(11) **EP 2 434 578 B1**
(45) Date de publication et mention de la délivrance du brevet: **24.03.2021**
(21) Numéro de dépôt: 11182612.9
(22) Date de dépôt: 23.09.2011
(51) Int. Cl.: H01Q 1/28, H01Q 25/00, H04B 7/204, H04B 7/185

(54) **Système antennaire a deux grilles de spots a mailles complémentaires imbriquées**
Antennensystem mit zwei Spot-Gittern mit komplementären überlappten Netzen
Antennal system with two grids of spots with nested complementary meshes

(30) Priorité: 24.09.2010 FR 1003789
(43) Date de publication de la demande: 28.03.2012
(73) Titulaire: Thales, 92400 Courbevoie (FR)
(72) Inventeur: Raguenet, Gérard, 31600 EAUNES (FR); Youssefi, Thierry, 31600 LABASTIDETTE (FR); Salomon, Michel, 31000 TOULOUSE (FR); Barritault, Etienne, 31000 TOULOUSE (FR); Le Boulch, Didier, 31780 CASTELGINEST (FR)
(74) Mandataire: Marks & Clerk France

(56) Documents cités:
- EP-A1- 0 420 739
- EP-A2- 1 126 543
- WO-A1-99/35766
- FR-A1- 2 854 737
- GB-A- 2 262 387

## Description

La présente invention concerne un système antennaire apte à couvrir une zone géographique avec deux grilles de spots à mailles imbriquées, et décalées l'une par rapport à l'autre pour se compléter. Elle s'applique notamment aux satellites de télécommunications multi-faisceaux, en particulier à ceux devant produire un grand nombre de faisceaux pour couvrir un territoire donné.

Le besoin de réduction des coûts de transmission de données nécessite une augmentation de la capacité des satellites. Dans le même sens, l'augmentation du débit utilisateur pour servir les applications de type multimédia induit une consommation toujours plus importante de bande passante.

Les évolutions des systèmes de communication par satellites ont répondu à certaines de ces exigences en offrant des services haut débit, notamment pour les applications liées à Internet. Ces systèmes produisent généralement plusieurs dizaines de faisceaux pour couvrir de larges zones géographiques d'intérêt, telles que des continents. Désormais, les nouveaux systèmes satellitaires sont prévus pour offrir des capacités de débits supérieures à 100Gb/s, donc avec un nombre de faisceaux accru, plus d'une centaine par exemple. Ces nouveaux systèmes à grand nombre de faisceaux conduisent à échantillonner les zones de services avec des spots élémentaires plus petits et requièrent, sur le satellite, des antennes de plus en plus grandes en taille de réflecteurs. Ainsi, pour les satellites développés à un horizon court terme, et opérant dans la bande de fréquence des 20 GHz, les réflecteurs ont des tailles situées entre 1,7m à 2,6m; pour les besoins de moyen terme, les tailles prévues sont comprises entre 3 m et 4 m, tandis que les réflecteurs à développer pour les besoins de long terme devraient dépasser 5 m de diamètre.

En outre, les systèmes antennaires sont construits selon une architecture de type « one feed, one beam », autrement dit une architecture associant un spot à une source (une source pouvant également être désignée par le terme d'élément rayonnant), qui permet de configurer la charge utile d'un satellite de manière assez simple. Un paramètre important dans la conception du système antennaire est celui de la taille des sources employées. Classiquement, on dimensionne celles-ci de manière à obtenir un rendement d'antenne satisfaisant. Aussi, les sources sont généralement dimensionnées pour que l'éclairement sur les bords du réflecteur soit compris entre -7 dB et -15 dB par rapport à l'éclairement au centre du réflecteur. Les sources sont ensuite implantées dans le plan focal côte à côte. Avec cette configuration, une première source accolée à une deuxième source va générer un spot distant du spot généré par la deuxième source, de sorte que les faisceaux d'une seule antenne n'éclaireront la zone géographique que de façon discontinue. Il faut donc une seconde antenne pour boucher le trou sur un axe, et une troisième voire une quatrième selon la maille pour remplir définitivement la couverture par un ensemble de faisceaux assurant les liaisons avec les niveaux de PIRE (« Puissance Isotrope Rayonnée Equivalente ») et de G/T requis pour la qualité de service envisagée.

Ainsi, compte tenu de ces contraintes, une architecture classique repose sur quatre antennes fonctionnant chacune en mode émission/réception (RX/TX). En effet, compte tenu de l'espace limité sur les lanceurs d'engin, une architecture à huit antennes comprenant quatre antennes en mode émission (TX) et quatre antennes en mode réception (RX) serait très difficile à mettre en œuvre.

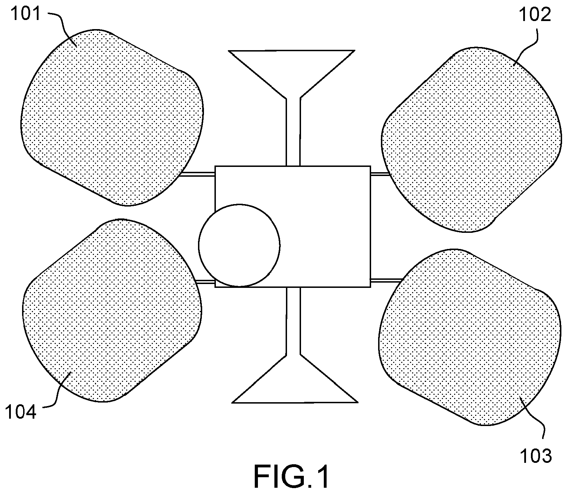

Ce fonctionnement en mode mixte RX/TX à quatre antennes comprend plusieurs inconvénients. Tout d'abord, il impose un fonctionnement du système antennaire sur des bandes éloignées et élargies. Par exemple, en bande Ka, l'émission est effectuée dans la bande des 20 GHz et la réception est effectuée dans la bande des 30 GHz. L'antenne doit offrir un compromis sur un ensemble de paramètres tels que taille des spots, la sélectivité spatiale des spots (autrement dit, le roll-off), le niveau de C/I sur 150% de la bande passante, le rapport C/I étant le rapport entre le signal utile C et les signaux interférents I issus des spots voisins. De plus, cette architecture emploie des blocs sources primaires complexes avec des sources large bande ainsi que des extracteurs de fréquence et de polarisation complexes et coûteux. En outre, le filtrage entre le mode émission et le mode réception peut s'avérer critique si le mode émission est à forte puissance. Enfin, une implantation sur un satellite conduit à des doubles déploiements des réflecteurs. Les contraintes de stockage de ces réflecteurs engendrent des interactions d'ordre mécanique avec les structures du lanceur de sorte que d'inévitables troncatures au niveau de la géométrie des réflecteurs de plus ou moins grande amplitude se produisent, comme illustré en figure 1, où les réflecteurs 101, 102, 103, 104 sont tronqués sur deux côtés. Par conséquent, une architecture à quatre réflecteurs en mode RX/TX provoque une rotation de 90° des couvertures à chaque saut d'antenne, des couvertures sensiblement elliptiques, des niveaux de C/I inacceptables à cause des remontées des lobes latéraux ou secondaires et une réduction de la surface exploitable des réflecteurs pouvant atteindre 1 dB voire 1,5 dB sur la directivité maximale accessible. Tous ces facteurs réduisent la capacité du système antennaire.

La société Boeing a proposé dans une demande de brevet européen référencée sous le numéro EP 1 126 543 un système antennaire comportant deux grilles de faisceaux imbriquées. Toutefois, ce système ne permet pas de résoudre les problèmes d'encombrement rencontrés sur les satellites offrant des services haut débit.

Un but de l'invention est de proposer un système antennaire multi-faisceaux capable de recevoir et d'émettre des signaux radioélectriques, dont l'architecture est de type « one feed one beam » et qui permette soit de réduire le nombre d'antennes nécessaires à la génération des couvertures, soit de pouvoir proposer une architecture exempte des problèmes d'aménagement de la configuration susmentionnée avec les réflecteurs tronqués. A cet effet, l'invention a pour objet un système antennaire multi-faisceaux selon la revendication 1.

Plusieurs spots de la première grille, générés par la première antenne, sont alignés selon deux axes sensiblement orthogonaux, de sorte qu'il existe des points se situant sensiblement à équidistance des centres de quatre spots adjacents, plusieurs spots de la deuxième grille, générés par une deuxième antenne, étant centrés sur lesdits points. La configuration optimale est obtenue en ayant des alignements parfaits des spots, de sorte que la maille formée par chacune des grilles soit parfaitement carrée. Des performances encore correctes peuvent toutefois être obtenues en s'éloignant de ce cas optimal en décalant légèrement les spots de sorte que les axes ne soient pas parfaitement orthogonaux.

Les spots de la première grille peuvent être sensiblement de la même dimension que les spots de la deuxième grille, les centres d'au moins deux spots de la deuxième grille étant, par exemple, positionnés à une distance sensiblement égale à un diamètre de spot de la première grille divisé par racine carrée de deux.

Selon un autre mode de réalisation, les spots de la deuxième grille ont un rayon au moins égal au double du rayon des spots de la première grille, les centres d'au moins deux spots de la deuxième grille étant positionnés au niveau de barycentres des centres des spots de la première grille.

Selon un exemple non revendiqué du système antennaire multi-faisceaux, plusieurs spots de la première grille, générés par la première antenne, sont alignés selon deux axes non orthogonaux, de sorte qu'il existe des spots adjacents dont les centres forment un parallélogramme, plusieurs spots de la deuxième grille, générés par une deuxième antenne, étant centrés sur les centres desdits parallélogrammes. Selon un exemple, les parallélogrammes sont des losanges.

Selon un exemple d'un système antennaire multi-faisceaux ne faisant pas partie de l'invention, au moins une antenne est dimensionnée de sorte qu'un faisceau est produit par un seul élément rayonnant, et pour une taille de réflecteur donnée, la taille des éléments rayonnants est choisie inférieure à la taille optimale conduisant à un rendement maximal de l'antenne, ladite taille étant choisie de sorte que les pertes d'énergie par débordement du réflecteur soient supérieures à celles obtenues avec ladite taille optimale ledit système comprenant au moins deux éléments rayonnants adjacents, ladite taille de l'élément étant choisie pour qu'un premier élément rayonnant, adjacent à un deuxième élément rayonnant dudit réseau, puisse générer un spot adjacent au spot généré par le deuxième élément rayonnant. Ce système antennaire est dit en "mode spillover"; il permet de générer des grilles continues de spots plus facilement et ainsi, mettre en œuvre une double grille plus aisément, en particulier dans le cas d'une densité élevée de spots.

Selon un mode de réalisation du système antennaire multi-faisceaux selon l'invention, la taille des sources est telle que le niveau d'éclairement sur les bords du réflecteur est dans un rapport compris entre les valeurs -2dB et -4dB par rapport au niveau d'éclairement maximum obtenu sur le réflecteur.

Selon un mode de réalisation du système antennaire multi-faisceaux selon l'invention, le système comprend deux paires d'antennes, les antennes de ladite première paire étant aptes à fonctionner en réception uniquement et les antennes de la deuxième paire étant aptes à fonctionner en émission uniquement, la première antenne de chaque paire étant configurée pour couvrir la zone géographique selon la première grille de spots, la deuxième antenne de chaque paire étant configurée pour couvrir ladite zone géographique selon la deuxième grille de spots.

Les antennes de la première paire peuvent être adaptées à fonctionner dans une première bande de fréquence, par exemple quelques centaines de MHz autour de 30 GHz, les antennes de la deuxième paire étant adaptées à fonctionner dans une deuxième bande de fréquence distincte de la première bande, par exemple quelques centaines de MHz autour de 20 GHz, les réflecteurs et les sources des antennes de la deuxième paire étant dimensionnés sensiblement en proportion du rapport de fréquence entre la première bande de fréquence et la deuxième bande de fréquence, de manière à ce que, pour chacune des grilles de spots, les spots générés par la première antenne soient sensiblement superposés à ceux générés par la deuxième antenne.

Les exemples précités fonctionnent en bande Ka mais l'invention s'applique à d'autres bandes de fréquence, par exemple les bandes Ku et C.

Selon un autre mode de réalisation, le système comprend deux antennes apte à fonctionner chacune en réception et en émission, la première antenne étant configurée pour couvrir la zone géographique selon la première grille de spots, la deuxième antenne étant configurée pour couvrir la zone géographique selon la deuxième grille de spots.

Avantageusement, l'ouverture des éléments rayonnants peut être de forme carrée, par exemple des cornets à section carrée, lesdits éléments rayonnants étant alignés et placés de sorte que leurs bords soient parallèles les uns aux autres.

L'invention concerne également un satellite comprenant un système antennaire tel que décrit plus haut.

L'invention concerne également un système de communication satellitaire comprenant au moins deux satellites distincts, le premier satellite comprenant ladite première antenne d'un système antennaire tel que décrit plus haut, un deuxième satellite comprenant ladite deuxième antenne dudit système antennaire.

D'autres caractéristiques apparaîtront à la lecture de la description détaillée donnée à titre d'exemple et non limitative qui suit faite en regard de dessins annexés qui représentent :
- la figure 1, un schéma représentant un système antennaire selon l'art antérieur comportant quatre réflecteurs aptes à fonctionner en émission et en réception ; cette figure a déjà été présentée plus haut ;
- les figures 2a, 2b, 2c, des exemples de mailles utilisées pour positionner les spots d'une grille ;
- la figure 3a, un exemple d'une première grille de spots obtenue avec le système selon l'invention ;
- la figure 3b, un exemple d'une seconde grille de spots complémentaire de la première grille représentée en figure 3a ;
- la figure 3c, un exemple de double grille de spots système selon l'invention, obtenue en combinant la première grille de la figure 3a et la seconde grille de la figure 3b ;
- la figure 4a, un deuxième exemple d'une première grille de spots obtenue avec le système selon l'invention ;
- la figure 4b, un deuxième exemple d'une seconde grille de spots complémentaire de la première grille représentée en figure 4a ;
- la figure 4c, un deuxième exemple de double grille de spots système selon l'invention, obtenue en combinant la première grille de la figure 4a et la seconde grille de la figure 4b ;
- la figure 5, un schéma représentant un premier mode de réalisation d'un système antennaire selon l'invention ;
- la figure 6, un schéma représentant un deuxième mode de réalisation d'un système antennaire selon l'invention ;
- la figure 7, un schéma représentant une double grille de sources à maille rectangulaire, l'une des deux grilles étant décalée par rapport à l'autre grille d'une demi-distance de spots selon les deux axes orthogonaux ;
- la figure 8, un schéma représentant une double grille de sources à maille carrée, l'une des deux grilles étant décalée par rapport à l'autre grille d'une demi-distance de spots selon les deux axes orthogonaux ;
- la figure 9, un schéma représentant un premier exemple de double grille de sources à maille triangulaire ;
- la figure 10, un schéma représentant un deuxième exemple de double grille de sources à maille triangulaire.

En préambule, quelques termes utilisés dans la suite du texte sont définis.

Par « antenne », on entend un ensemble composé d'un réflecteur principal, dimensionné par l'homme de l'art selon des critères relatifs aux faisceaux à générer sur une couverture de service et associé ou non à un ou des réflecteurs secondaires ainsi qu'à un ensemble de sources dont l'image de rayonnement via l'ensemble du ou des réflecteurs génère une grille de faisceaux assurant toute ou partie du recouvrement de la zone de service.

Par « maille », on entend un motif géométrique décrivant la position des faisceaux d'une grille, ou plus précisément le motif établi en reliant les centres des spots générés par les faisceaux. Les grilles de faisceaux ont des géométries en partiellement ou totalement régulières. La maille des faisceaux associés à une grille fige le positionnement des sources du réseau focal de manière physique dans la construction de l'antenne.

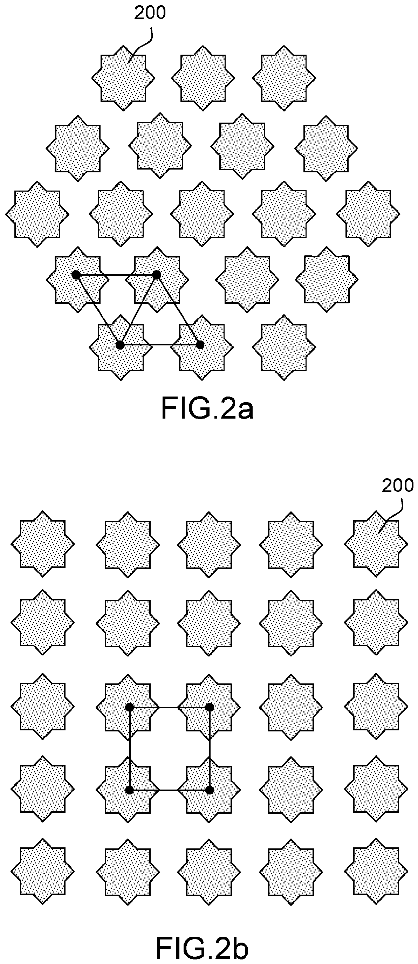

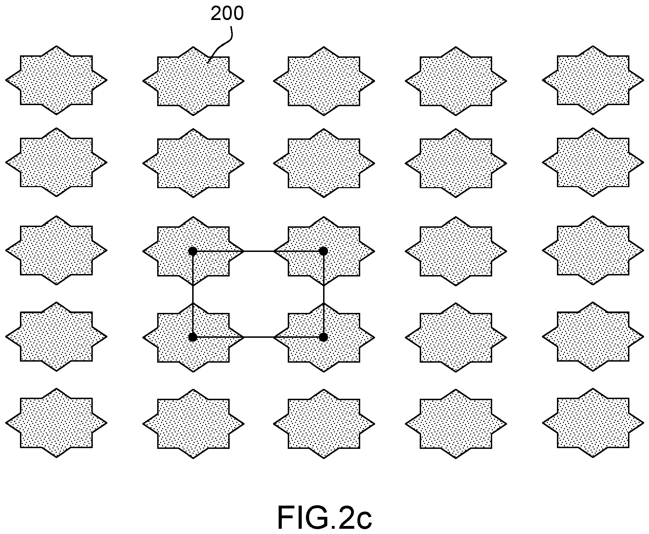

Comme représenté en figures 2a, 2b, 2c, plusieurs types de mailles peuvent être utilisés : des mailles hexagonales, carrées, rectangulaires, circulaires, ou autres. Dans les figures 2a, 2b, 2c, les spots 200 sont représentés par des polygones à seize côtés. La figure 2a représente une maille quadrilatérale équilatérale, pour laquelle des cornets à ouverture circulaire ou hexagonale peuvent par exemple être utilisés. La figure 2b représente une maille carrée, pour laquelle des cornets à ouverture carrée ou circulaire, entre autres, peuvent être utilisés. La figure 2c représente une maille rectangulaire, pour laquelle des cornets à ouverture pyramidale, carrée ou rectangulaire peuvent par exemple être utilisés. Il est à noter que toutes les sources du réseau focal n'ont pas besoin de respecter scrupuleusement la maille régulière pour un réseau focal donné.

Par « grille complète », on entend une grille qui assure l'ensemble de la couverture de service. Selon l'invention, deux antennes réalisent la grille complète. Selon le type de maille envisagé pour générer les faisceaux, une antenne réalise une première grille avec des faisceaux d'une certaine taille qui assurent un recouvrement partiel de la couverture de services. Une seconde grille réalisée par la seconde antenne et dont la taille des faisceaux peut être différente de celle de la première est positionnée superposée à la première grille de façon à réaliser la couverture complète sur la zone de service. La seconde grille est décalée géométriquement par rapport à la première grille de façon à combler les lacunes de performances de la première grille. Ce décalage dépend de la nature de la première grille et la seconde grille est positionnée de façon à obtenir les meilleures performances de l'ensemble des deux antennes.

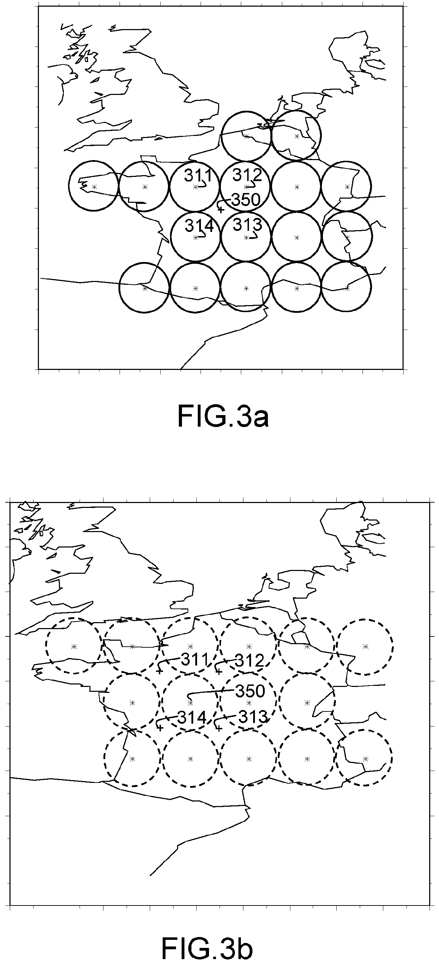

La figure 3a présente un exemple d'une première grille de spots obtenue avec le système selon l'invention. La première grille de spots comprend un ensemble de spots adjacents et alignés sur deux axes orthogonaux, de manière à ce que les centres 311, 313, 313, 314 de quatre spots adjacents forment un carré, comme représenté sur la figure. Ainsi, la première grille échantillonne la couverture, dans l'exemple le territoire de la France métropolitaine, par des spots répartis selon une maille carrée la maille étant le motif géométrique reliant les centres des spots adjacents.

L'utilisation d'une seule grille à maille carrée générée avec une seule antenne, diminue a priori les performances par rapport à une grille formée sur le modèle d'une maille classique en triangle, notamment à cause du fait que le point de directivité minimale est un point quadruple 350, et non pas un point triple. Aussi, le roll-off dans la direction du point quadruple ne permet pas de tenir les objectifs de capacité ou de disponibilité vers l'utilisateur. Comme expliqué par la suite, l'emploi d'une seconde grille de spots permet de résoudre ce problème.

La figure 3b présente un exemple d'une seconde grille de spots complémentaire de la première grille représentée en figure 3a. La seconde grille de spots est formée selon une maille carrée de même dimensions que celle la première grille (espacements selon les deux axes), mais décalée d'un demi-spot selon ces deux mêmes axes. Elle comprend donc une densité de spots identique à celle de la première grille mais est décalée par rapport à la première grille, de sorte que les centres 350 des spots appartenant à la seconde grille soient situés sensiblement aux points les plus éloignés des centres 311, 313, 313, 314 des spots de la première grille, autrement dit, au niveau de la zone d'intersection quadruple de quatre spots adjacents de la première grille

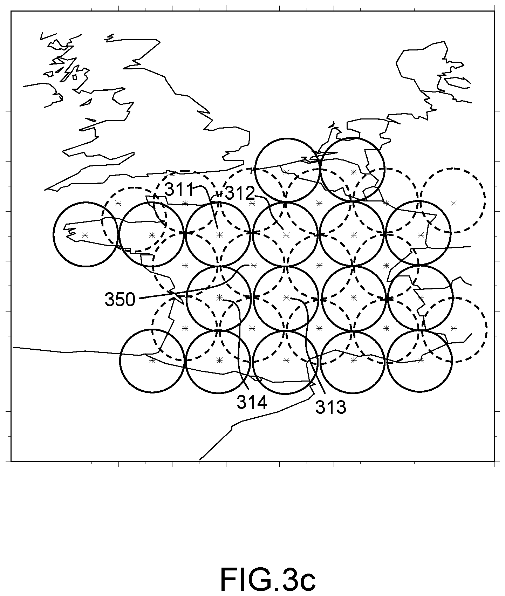

La figure 3c présente un exemple de double grille de spots obtenue avec le système selon l'invention, en combinant la première grille de la figure 3a et la seconde grille de la figure 3b. Les deux grilles de spots sont imbriquées, c'est-à-dire que les spots de la première grille recouvrent partiellement les spots de la seconde grille et les spots de la seconde grille recouvrent partiellement ceux de la première grille. En outre, la deuxième grille est décalée par rapport à la première grille selon chacun des deux axes et selon une distance sensiblement égale à une demi-largeur de spot. La première grille à maille carrée se trouve ainsi complétée au niveau des ses points quadruples par la seconde grille de même espacement mais décalée, de sorte qu'au point de directivité minimale d'une grille, se situe un point de directivité maximale de l'autre grille.

Les règles de dimensionnement de l'architecture sont modifiées par rapport à un remplissage selon une maille triangulaire ou hexagonale. La reprise de conception doit donc se faire au niveau de la granularité, car les distances inter faisceaux des spots en maille triangulaire équilatérale ou isocèle (issue du carré) ne sont pas les mêmes. Ainsi un premier paramètre à modifier est la taille optimale du réflecteur dont le choix est effectué par rapport à un point de performances dans le pire cas (qui se trouve être un point double et non un point triple) ; le roll-off est donc choisi en ce sens et conduit ainsi au diamètre le plus approprié. Dans un second temps, le choix du rapport F/D (Focale / Diamètre) est effectué en tenant compte d'objectifs de performances en mode dépointé et aussi de valeurs de C/I requises. Sur l'exemple de la figure 3c, il apparaît que l'on peut couvrir le territoire de la France métropolitaine avec une première grille de 17 faisceaux et une deuxième grille de 15 faisceaux en respectant une granularité des faisceaux à 0,25°.

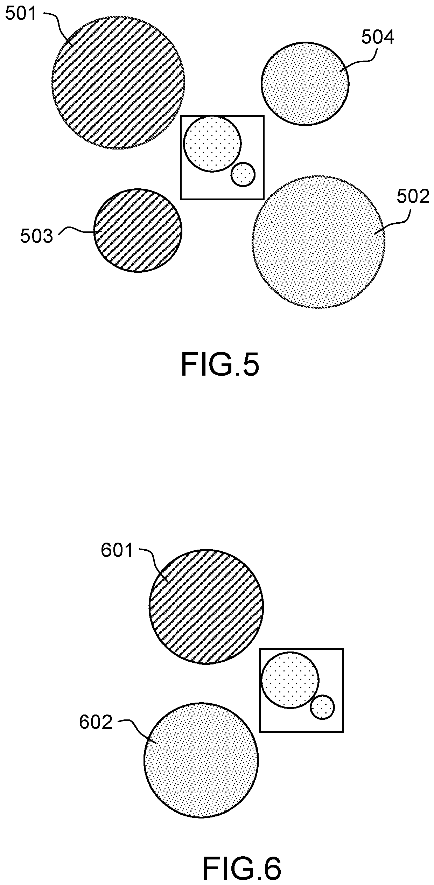

L'utilisation d'une double grille à maille carrée comporte notamment l'avantage qu'elle offre la possibilité de mettre en œuvre des sources de forme carrée par exemple des cornets pyramidaux carrés, comme illustré en figure 5. Associés à la maille carrée des faisceaux, ces sources conduisent à une meilleure efficacité de l'échantillonnage du territoire à couvrir ; elles permettent d'obtenir un gain de directivité d'un rapport 4/π dans le cas d'un carré en comparaison de l'usage de cornets ronds ou circulaires dans le cas d'une maille triangulaire ou hexagonale. En outre, la double grille permet d'obtenir des performances améliorées dans le pire cas sur la couverture puisque le point le plus faible en directivité est un point d'intersection entre deux faisceaux en maille carrée et non entre trois faisceaux dans le cas d'une maille hexagonale ou triangulaire classique. Le gain en directivité est lié au plus faible roll-off à partir de la directivité maximum du faisceau.

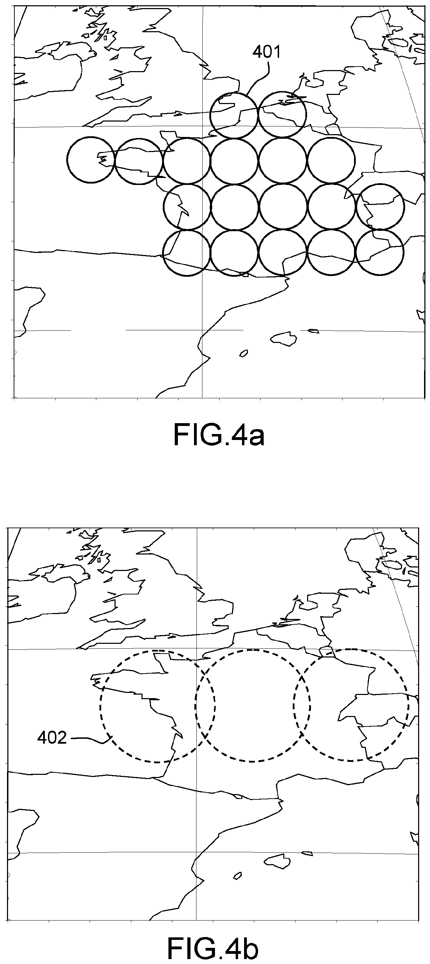

La figure 4a présente un deuxième exemple d'une première grille de spots obtenue avec le système selon l'invention. La première grille de spots comprend un ensemble de spots 401 adjacents et alignés sur deux axes orthogonaux, similairement à la figure 3a.

La figure 4b présente un deuxième exemple d'une seconde grille de spots complémentaire de la première grille représentée en figure 4a. Les spots 402 de la deuxième grille sont représentés en pointillés sur la figure 4b. Contrairement au premier exemple, les spots ont une dimension différente de celle des spots de la première grille de la figure 4a.

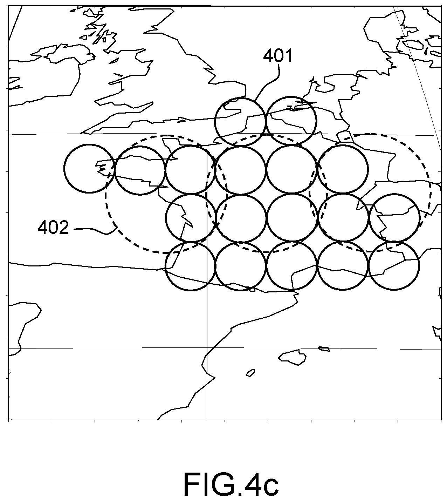

La figure 4c présente un deuxième exemple de double grille de spots système selon l'invention, obtenue en combinant la première grille de la figure 4a et la seconde grille de la figure 4b.

La couverture du territoire à l'aide de deux grilles en maille carrée imbriquées et décalées, peut être générée en utilisant une antenne pour chacune des deux grilles. On distingue alors notamment deux architectures adaptées à la génération d'une telle double grille pour des systèmes assurant la réception et l'émission de signaux :
- une première architecture à quatre antennes, dans laquelle une première antenne fonctionnant en réception génère la première grille de spots, une deuxième antenne fonctionnant en réception génère la seconde grille de spots, une troisième antenne, fonctionnant en émission, et générant la première grille de spots, et une quatrième antenne émettrice générant la seconde grille de spots ;
- une deuxième architecture, dans laquelle deux antennes fonctionnent chacune en émission et en réception, une première antenne générant une première grille, la deuxième antenne générant la seconde grille.
Les résultats montrent que ces architectures sont avantageuses vis-à-vis des architectures classiques, tant en termes de performances radiofréquence que d'encombrement.

La figure 5 illustre par un schéma, un premier mode de réalisation d'un système antennaire selon l'invention mettant en œuvre la première architecture précitée. Les réflecteurs déployés du système sont représentés de manière schématique par des disques, le carré central représentant la face Terre du satellite et les deux cercles sur cette face terre, marquant l'emplacement des antennes du lien de contribution assurant les liaisons vers les stations de trafic du service de communication au sol.

Deux antennes, préférablement en mode spillover, sont requises pour générer une grille complète de spots. Chaque paire d'antennes est adaptée et dimensionnée dans sa bande de fréquence. Dans l'exemple, les deux antennes dédiées au mode émission sont pourvues d'un réflecteur 501, 502 de 3900 mm de diamètre, et les deux antennes opérant en réception ont chacune un réflecteur 503, 504 dont les dimensions sont choisies proportionnellement aux rapports de fréquence (dans l'exemple, ce rapport est égal à 20GHz/30GHz, d'où un réflecteur de 2600 mm de diamètre pour le fonctionnement à 30 GHz).

Les spots sont identiques et superposés en mode émission et réception. Cette architecture, contrairement à la configuration classique à quatre antennes en mode mixte RX/TX, ne souffre pas des effets des troncatures des réflecteurs, puisque les plus gros sont stockés, soit sur le côté satellite au plus près de la caisse, soit en mode face Terre. Les réflecteurs, qui dans l'exemple sont plus petits pour le mode réception (à 30GHz), sont stockés sur les côtés du satellite, soit seuls, soit en second rang derrière les réflecteurs du mode émission (à 20GHz).

Dans le système de l'art antérieur, les quatre antennes étaient pourvus de réflecteurs dont les dimensions étaient sensiblement identiques et résultaient pour chacun d'entre-eux des compromis entre le mode RX et le mode TX. Dans le système selon l'invention, la paire d'antennes permettant de générer la double grille en réception est plus petite que la paire d'antennes utilisée pour l'émission. Aussi, cette configuration matérielle qui résulte directement de l'utilisation de la double grille à maille carrée permet de relaxer les problèmes d'aménagement rencontrés dans l'art antérieur en évitant les troncatures des réflecteurs.
La première architecture comporte notamment les avantages suivants :
- un dimensionnement dans la seule bande de fréquence de réception ou d'émission, ce qui évite les compromis de paramétrage du système antennaire comme dans le cas classique du mode mixte RX/TX ; autrement dit, chacun des deux blocs sources, en réception ou en émission, est dimensionné dans sa seule bande de fréquence et ne doit pas être conçu pour réaliser un compromis sur 150% de bande passante ;
- une simplification de l'architecture de sources dont la conception se limite à l'accès radiofréquence, le polariseur (si nécessaire) et l'élément rayonnant ; les blocs sources sont moins complexes du fait de la disparition des séparateurs de fréquence, nécessaires dans l'architecture classique ;
- la séparation des blocs émission et réception simplifie aussi la problématique liée à la tenue en puissance, notamment les problèmes de PIMPs (Produits d'InterModulation Passives) ;
- une superposition parfaite des spots (correspondant à la notion de congruence) liés à l'émission et de ceux liés à la réception, lorsque les paramètres de conception du système antennaire sont choisis de façon homothétique en fréquence (c'est-à-dire dans un rapport 2/3 dans le cas d'une émission à 20GHz et d'une réception à 30GHz), évitant ainsi les problèmes liés aux couvertures en forme d'ellipse et rencontrés dans l'architecture classique ;
- par ailleurs, les zones de performance minimales se situent au niveau des jonctions des spots qui sont sur des points double et non triple, offrant ainsi davantage de flexibilité sur le paramètre roll-off, donc sur la conception des sources primaires, ce qui permet d'avoir une meilleure homogénéité des niveaux de directivité sur la couverture. Cette flexibilité rend possible l'accroissement de la directivité sur la couverture et facilite l'implantation de systèmes capacitifs à très haut débit ;
- la possibilité d'utiliser des cornets carrés comme échantillonneurs dans les réseaux focaux qui permettent un gain de directivité de 10*log(4/pi) et aussi des latitudes de réglages qui ne peuvent être envisagées avec la maille hexagonale : possibilité de glissements locaux de sources afin d'optimiser les spots vis à vis de la couverture de service ; autrement dit, une source peut être légèrement décalée par rapport à l'alignement initial, de manière à couvrir une zone excentrée.

A titre d'exemple, une configuration satisfaisante est obtenue en choisissant les paramètres suivants : une granularité des faisceaux à 0,25° sur la France métropololitaine, un mode spillover aux alentours de -3 dB, une taille de réflecteur sensiblement égale à 3,9 m pour la bande 20GHz conduisant à un roll-off au point double d'environ -4 dB, et une directivité dans le pire cas (c'est-à-dire au niveau des jonctions des spots) d'environ 52 dBi pour une couverture de la France métropolitaine et de la Corse à l'aide de 32 faisceaux.

Dans l'exemple précité, la première architecture permet d'obtenir des performances identiques en termes de directivité que celles obtenues avec la configuration classique à quatre antennes en mode mixte sans les effets de troncatures - et supérieures de près de 1 dB aux performances obtenues avec prise en compte des troncatures dans la configuration classique,-, tout en bénéficiant des simplifications susmentionnées ainsi que d'un aménagement facilité sur un satellite. L'amélioration de l'aménagement ouvre des possibilités d'accroissement des diamètres des réflecteurs de façon à maximiser la capacité du satellite, soit par augmentation du nombre de faisceaux plus petits, soit par amélioration des performances de directivités. Par exemple, des réflecteurs d'un diamètre de 3500 à 3900 mm peuvent être envisagés pour l'émission et des réflecteurs d'un diamètre de 2100 à 2600 mm peuvent être envisagés pour la fonction de réception.

La figure 6 illustre par un schéma, un deuxième mode de réalisation d'un système antennaire selon l'invention mettant en œuvre la deuxième architecture précitée. Cette deuxième architecture met en œuvre seulement deux antennes, chacune en mode mixte RX/TX. Les réflecteurs 601, 602 de ces deux antennes sont représentés sur la figure par des disques.

Les paramètres sont choisis selon le même type de contraintes que pour l'architecture classique à quatre antennes RX/TX, à savoir privilégier le mode émission ou le mode réception, tenir les niveaux de roll-off, tenir les niveaux de C/I et de dépointage. Mais un grand avantage procuré par cette deuxième architecture est de pouvoir proposer un système comprenant seulement deux antennes avec une faible perte de directivité par rapport à la configuration de l'art antérieur à quatre antennes en mode mixte RX/TX. Du fait du compromis à réaliser entre le mode émission et le mode réception, nous aurons deux modes de fonctionnement différents entre l'émission, à la fréquence la plus basse qui s'organise selon un mode spillover et la réception qui se fera selon un mode « gaussien » c'est à dire proche de l'éclairement théorique optimal. Le mode pur spillover en mode RX et TX séparés (c'est à dire un bloc source génère toute la grille des faisceaux) conduit à un écart de performances d'environ trois décibels isotropes en termes de directivité par rapport à la première architecture précitée du type quatre antennes en mode RX/TX. Le fait de générer la couverture à l'aide de deux grilles imbriquées permet de compenser au moins en partie la perte de directivité due au mode spillover, d'une part en raison de la gestion des roll-off sur la maille carrée, d'autre part du fait que le point pire cas est un point double et non un triple ou quadruple.

Par ailleurs, selon cette deuxième architecture, les réflecteurs peuvent être identiques et il n'y a que deux blocs sources. La mission de type large multi spots peut ainsi être aménagée d'un seul côté d'un satellite en mode double déploiement pour les réflecteurs (sur le côté ou en face Terre), laissant ainsi l'autre partie du satellite libre pour une autre mission en bande Ku, en bande C, ou en bande S, par exemple.

Ainsi, cette deuxième architecture peut être avantageuse, par exemple pour des opérateurs de communications souhaitant offrir des services haut débit à moindre coût ou pour des opérateurs souhaitant des satellites multi-missions, grâce à l'espace libéré par les deux antennes en moins. A titre d'exemple, une configuration satisfaisante en mode deux antennes Rx/Tx est obtenue en choisissant les paramètres suivants : une granularité des faisceaux à 0,235° sur la France métropolitaine, un mode spillover aux alentours de -3,4 dB en émission, un mode gaussien aux alentours de -8 dB en réception, une taille de réflecteur sensiblement égale à 3,9 m conduisant à un roll-off aux points doubles d'environ -3 dB, et une directivité dans le pire cas (c'est-à-dire au niveau des jonctions des spots) d'environ 52 dBi pour une couverture de la France métropolitaine comprenant la Corse à l'aide de 36 faisceaux à 20 GHz, ce même réflecteur conduisant à un roll-off au point double d'environ -6 dB et une directivité dans le pire cas d'environ 54 dBi, toujours pour une couverture comprenant la France métropolitaine (y compris la Corse) par 36 faisceaux.

Avantageusement, dans le cas où les antennes comportent chacune un réseau d'éléments rayonnants aptes à recevoir et/ou à transmettre des signaux radioélectriques et où chaque antenne est placée en regard d'un réflecteur, un faisceau étant produit par un seul élément rayonnant, pour une taille de réflecteur donnée, la taille des éléments rayonnants des antennes est choisie inférieure à la taille optimale conduisant à un rendement maximal de l'antenne, ladite taille étant choisie de sorte que les pertes d'énergie par débordement du réflecteur soient supérieures à celles obtenues avec ladite taille optimale, le système comprenant au moins deux éléments rayonnants adjacents, ladite taille des éléments étant choisie pour qu'un premier élément rayonnant, adjacent à un deuxième élément rayonnant du réseau d'éléments rayonnants, puisse générer un spot adjacent au spot généré par le deuxième élément rayonnant.

La réduction de diamètre opérée entre une configuration d'antennes à spillover et un dimensionnement classique est d'un facteur sensiblement égal à deux. Une source classique procure un éclairement sur les bords du réflecteur d'environ -12 dB par rapport au point du réflecteur éclairé au maximum, tandis que la source de taille réduite selon cette technique donne un éclairement au voisinage de -3 dB par rapport au point du réflecteur éclairé au maximum. Les réflecteurs du système antennaire selon l'invention peuvent ainsi être éclairés sur ses bords à des niveaux compris de préférence entre -2 et -4 dB par rapport au niveau d'éclairement maximal du réflecteur.

Cette technique est appelée « spillover », car le choix de sources plus petites que les tailles conventionnelles conduit à des pertes par débordement plus importantes et des antennes de rendements inférieurs à 50%, ce qui semble, a priori, être un choix aberrant. Toutefois, ce choix, conduisant à des pertes par débordement plus élevées, permet de concevoir un système antennaire avec une continuité de spots sur la zone à couvrir tout en ayant un nombre réduit d'antennes. Le sacrifice de rendement d'antenne permet ainsi de diminuer de la taille des sources radioélectriques de façon à resserrer les faisceaux pour pouvoir remplir une grille de spots avec une seule antenne.

Aussi, le système selon l'invention peut mettre en œuvre cette technique de spillover pour générer chacune des grilles de la double grille à mailles carrées. La combinaison des techniques complémentaires que sont, d'une part, la couverture par une double grille à mailles carrée, et d'autre part, la technique de spillover permet de réaliser des systèmes antennaires dont les performances sont au moins aussi bonnes que celles obtenues par une architecture classique. En effet, la technique de spillover permet de générer plus aisément une grille comprenant des spots adjacents, et les avantages techniques obtenus grâce à l'utilisation d'une double grille compensent la perte de rendement due au spillover, ces avantages techniques étant notamment :
▪ une directivité au point de pire cas localisée sur un point double d'interspots ;
▪ une valeur de C/I satisfaisante du fait de l'accroissement des distances liées à la maille;
▪ une directivité accrue par la possibilité d'emport de sources carrées générant des spots selon une maille carrée : adéquation des échantillonneurs à leur position dans le plan focal et meilleur remplissage de la surface captrice d'énergie.

Par ailleurs, il est à noter que le fonctionnement en double grille permet une plus grande souplesse dans la gestion des paramètres du système antennaire. Il offre notamment une latitude sur la taille des sources et leur écartement, ainsi que sur la gestion du mode spillover, en fonction du roll-off sur un point double qui est moins critique qu'un point triple en termes de pente de diagramme et de variations rapides.

Selon un autre mode de réalisation, la première grille est générée à l'aide d'une première antenne implantée sur un premier satellite, la seconde grille étant générée par une antenne implantée sur un second satellite, les deux satellites se complétant pour couvrir une zone géographique donnée.

Selon un autre mode de réalisation, le système antennaire fonctionne uniquement en réception ou uniquement en émission. Dans ce cas, une architecture à deux antennes peut être employée, une première antenne générant la première grille uniquement en émission ou uniquement en réception, la seconde antenne générant la seconde grille uniquement en émission ou uniquement en réception.

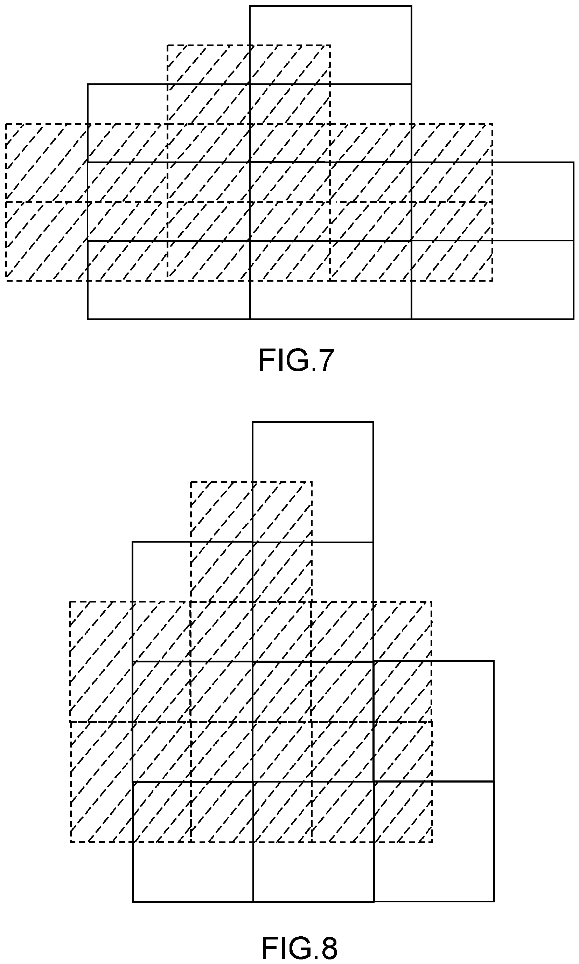

Comme illustré sur les schémas des figures 7 et 8, une source de forme rectangulaire (figure 7) ou carrée (figure 8) peut être utilisée pour optimiser l'échantillonnage du territoire à couvrir. Dans la figure, les sources associées à une première grille sont représentés en traits plein, tandis que les sources de la seconde grille sont représentées en pointillés.

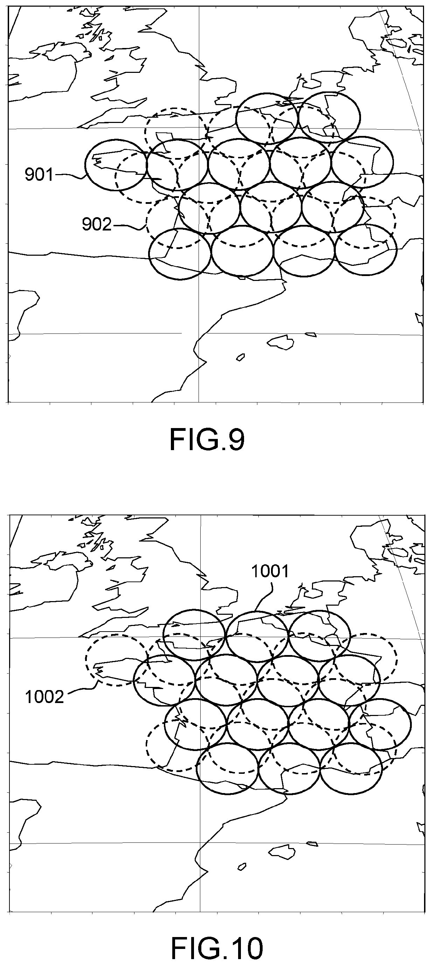

Les figures 9 et 10 représentent des exemples de double grille de sources à maille triangulaire. Selon un premier exemple illustré en figure 9, les spots 902 de la seconde grille, représentés en pointillés, sont positionnés sur des points triples de la première grille, c'est-à-dire que chacun de leurs centres est placé au centre d'un triangle équilatéral reliant trois centres de spots 901, représentés en traits pleins, de la première grille. Selon un deuxième exemple illustré en figure 10, les spots 1002 de la seconde grille sont positionnés sur des points double de la première grille ; autrement dit, les centres spots 1002 de la seconde grille sont positionnés au milieu du segment reliant deux centres de spots 1001 de la première grille.

Un avantage de l'architecture antennaire selon l'invention est qu'elle permet une mise en place progressive d'un service de diffusion de données par satellite, avec la mise en fonctionnement d'une première antenne montée sur un premier satellite, suivi par la suite, d'une mise en fonctionnement d'une deuxième antenne montée sur un second satellite. La mise en œuvre de la première antenne permet déjà de couvrir le territoire en évitant les zones totalement non couvertes.

Une première antenne sur un premier satellite offrant, par exemple, un maillage carré peut démarrer un service sur une zone géographique. Le positionnement précis de la maille carrée peut déjà viser la couverture d'un certain nombre de villes ou de zones sur le dit territoire. Ainsi un opérateur satellite peut à moindre coût démarrer le déploiement d'un nouveau service de diffusion. En fonction de sa pénétration de marché, il lui est ensuite possible de compléter la grille complète en disposant d'une seconde antenne sur un second satellite qui assure le complément sur la zone de services. De nombreuses approches de compléments sont envisageables à ce niveau du fait aussi qu'on peut imbriquer des mailles de tailles différentes. A titre d'exemple, un certain service peut être offert avec une première antenne en présentant des trous aux points quadruples. Une seconde antenne de taille moindre (donc offrant des débits moindres) peut toutefois être proposée de façon à "boucher" les trous de la grille précédente et couvrir ainsi la zone complète. Bien sûr, l'ajout d'une seconde antenne identique à la première antenne sur un second satellite permet aussi à performances identiques de remplir cette fonction.

D'autres avantages du système antennaire selon l'invention sont, entre autres : un aménagement facilité du satellite, l'absence de troncature des réflecteurs en cas de stockage latéral des antennes, la capacité de d'utiliser de très grands diamètres de réflecteurs, la possibilité d'utiliser des sources à haute efficacité adaptées à leur maille comme les cornets carrés dans le cas de la maille carrée. On a ainsi l'échantillonnage le plus performant et pertinent dans le plan focal de l'énergie focalisée par le réflecteur.

## Revendications

1. Système antennaire multi-faisceaux configuré pour couvrir une zone géographique décomposée en une pluralité de spots, le système comprenant : deux antennes (501, 503, 502, 504, 601, 602) en réception et/ou en émission, les antennes sont configurées pour couvrir ladite zone avec deux grilles de spots, chaque antenne comprenant une pluralité d'éléments rayonnants produisant chacun un spot, **caractérisé en ce que** les éléments rayonnants étant agencés pour que plusieurs spots de la première grille, générés par une première antenne (501, 503, 601) soient alignés selon deux axes sensiblement orthogonaux, de sorte qu'il existe des points se situant sensiblement à équidistance des centres de quatre spots adjacents, plusieurs spots de la deuxième grille, générés par la deuxième antenne (502, 504, 602), étant centrés sur lesdits points.

2. Système antennaire multi-faisceaux selon la revendication 1, dans lequel les spots de la première grille sont sensiblement de la même dimension que les spots de la deuxième grille.

3. Système antennaire multi-faisceaux selon la revendication 1, dans lequel les spots (402) de la deuxième grille ont un rayon au moins égal au double du rayon des spots de la première grille (401).

4. Système antennaire multi-faisceaux selon l'une quelconque des revendications précédentes, le système comprend au moins un réflecteur et chaque antenne comprend une pluralité d'éléments rayonnants, dans lequel au moins une antenne est dimensionnée de sorte qu'un faisceau est produit par un seul élément rayonnant, et pour une taille de réflecteur donnée, la taille des éléments rayonnants est choisie inférieure à la taille optimale conduisant à un rendement maximal de l'antenne, ladite taille étant choisie de sorte que les pertes d'énergie par débordement du réflecteur soient supérieures à celles obtenues avec ladite taille optimale, ledit système comprenant au moins deux éléments rayonnants adjacents, ladite taille de l'élément étant choisie pour qu'un premier élément rayonnant, adjacent à un deuxième élément rayonnant dudit réseau, puisse générer un spot adjacent au spot généré par le deuxième élément rayonnant.

5. Système antennaire multi-faisceaux selon la revendication 4, dans lequel la taille des éléments rayonnants est telle que le niveau d'éclairement sur les bords du réflecteur est dans un rapport compris entre -2dB et -4dB par rapport au niveau d'éclairement maximum obtenu sur le réflecteur.

6. Système antennaire multi-faisceaux selon l'une quelconque des revendications précédentes, le système comprenant deux paires d'antennes (501, 502, 503, 504), les antennes de ladite première paire (503, 504) étant aptes à fonctionner en réception uniquement et les antennes de la deuxième paire (501, 502) étant aptes à fonctionner en émission uniquement, la première antenne (501, 503) de chaque paire étant configurée pour couvrir la zone géographique selon la première grille de spots, la deuxième antenne (502, 504) de chaque paire étant configurée pour couvrir ladite zone géographique selon la deuxième grille de spots.

7. Système antennaire multi-faisceaux selon la revendication 6, dans lequel les antennes de la première paire (503, 504) sont adaptées à fonctionner dans une première bande de fréquence, par exemple quelques centaines de MHz autour de 30 GHz, les antennes de la deuxième paire (501, 502) étant adaptées à fonctionner dans une deuxième bande de fréquence distincte de la première bande, par exemple quelques centaines de MHz autour de 20 GHz, les réflecteurs et les éléments rayonnants des antennes de la deuxième paire étant dimensionnés sensiblement en proportion du rapport de fréquence entre la première bande de fréquence et la deuxième bande de fréquence, de manière à ce que, pour chacune des grilles de spots, les spots générés par la première antenne soient sensiblement superposés à ceux générés par la deuxième antenne.

8. Système antennaire multi-faisceaux selon l'une quelconque des revendications 1 à 5, le système comprenant deux antennes aptes à fonctionner chacune en réception et en émission, la première antenne (601) étant configurée pour couvrir la zone géographique selon la première grille de spots, la deuxième antenne (602) étant configurée pour couvrir la zone géographique selon la deuxième grille de spots.

9. Système antennaire multi-faisceaux selon l'une quelconque des revendications précédentes, dans lequel les éléments rayonnants d'au moins une antenne ont une ouverture de forme carrée, lesdits éléments rayonnants étant alignés et placés de sorte que leurs bords soient parallèles les uns aux autres.

10. Satellite comprenant un système antennaire selon l'une quelconque des revendications précédentes.

11. Système de communication satellitaire comprenant au moins deux satellites distincts, le premier satellite comprenant ladite première antenne d'un système antennaire selon l'une quelconque des revendications 1 à 9, un deuxième satellite comprenant ladite deuxième antenne dudit système antennaire.

## Patentansprüche

1. Mehrstrahliges Antennensystem, konfiguriert zum Abdecken eines geographischen Bereichs, welcher in eine Vielzahl von Spots gegliedert ist, wobei das System Folgendes umfasst:
zwei Empfangs- und/oder Sendeantennen (501, 503, 502, 504, 601, 602), wobei die Antennen konfiguriert sind, um den Bereich mit zwei Spot-Gittern abzudecken, wobei jede Antenne eine Vielzahl von Strahlelementen umfasst, welche jeweils einen Spot erzeugen, **dadurch gekennzeichnet, dass** die Strahlelemente so angeordnet sind, dass mehrere Spots des ersten Gitters, welche durch eine erste Antenne (501, 503, 601) erzeugt werden, entlang zwei im Wesentlichen rechtwinkligen Achsen ausgefluchtet sind, sodass Punkte vorhanden sind, welche sich im Wesentlichen in gleichem Abstand zu den Mittelpunkten von vier benachbarten Spots befinden, wobei mehrere Spots des zweiten Gitters, welche durch die zweite Antenne (502, 504, 602) erzeugt werden, auf die Punkte zentriert sind.

2. Mehrstrahliges Antennensystem nach Anspruch 1, wobei die Spots des ersten Gitters im Wesentlichen die gleiche Abmessung besitzen wie die Spots des zweiten Gitters.

3. Mehrstrahliges Antennensystem nach Anspruch 1, wobei die Spots (402) des zweiten Gitters einen Radius besitzen, welcher mindestens gleich dem Doppelten des Radius der Spots des ersten Gitters (401) ist.

4. Mehrstrahliges Antennensystem nach einem der vorhergehenden Ansprüche, wobei das System mindestens einen Reflektor umfasst und jede Antenne eine Vielzahl von Strahlelementen umfasst, wobei mindestens eine Antenne so dimensioniert ist, dass ein Strahl durch ein einziges Strahlelement erzeugt wird, und für eine gegebene Reflektorgröße, die Größe der Strahlelemente kleiner als die optimale Größe gewählt ist, was zu einem maximalen Wirkungsgrad der Antenne führt, wobei die Größe so gewählt ist, dass die Energieverluste durch Reflektorüberlauf höher als diejenigen sind, welche mit der optimalen Größe erzielt werden, wobei das System mindestens zwei benachbarte Strahlelemente umfasst, wobei die Größe des Elements so gewählt ist, dass ein erstes Strahlelement, welches an ein zweites Strahlelement des Netzwerks angrenzt, einen Spot erzeugen kann, welcher an den durch das zweite Strahlelement erzeugten Spot angrenzt.

5. Mehrstrahliges Antennensystem nach Anspruch 4, wobei die Größe der Strahlelemente so gestaltet ist, dass der Beleuchtungspegel an den Rändern des Reflektors in einem Verhältnis liegt, welches zwischen -2dB und -4dB im Vergleich zu dem maximalen Beleuchtungspegel liegt, welcher an dem Reflektor erzielt wird.

6. Mehrstrahliges Antennensystem nach einem der vorhergehenden Ansprüche, wobei das System zwei Antennenpaare (501, 502, 503, 504) umfasst, wobei die Antennen des ersten Paares (503, 504) in der Lage sind, nur im Empfangsbetrieb zu arbeiten und die Antennen des zweiten Paares (501, 502) in der Lage sind, nur im Sendebetrieb zu arbeiten, wobei die erste Antenne (501, 503) eines jeden Paares konfiguriert ist, um den geographischen Bereich dem ersten Spot-Gitter entsprechend abzudecken, wobei die zweite Antenne (502, 504) eines jeden Paares konfiguriert ist, um den geographischen Bereich dem zweiten Spot-Gitter entsprechend abzudecken.

7. Mehrstrahliges Antennensystem nach Anspruch 6, wobei die Antennen des ersten Paares (503, 504) geeignet sind, um in einem ersten Frequenzband zu arbeiten, beispielsweise einige Hundert MHz um 30 GHz, wobei die Antennen des zweiten Paares (501, 502) geeignet sind, um in einem zweiten Frequenzband zu arbeiten, welches sich von dem ersten Frequenzband unterscheidet, beispielsweise einige Hundert MHz um 20 GHz, wobei die Reflektoren und die Strahlelemente der Antennen des zweiten Paares im Wesentlichen proportional zum Frequenzverhältnis zwischen dem ersten Frequenzband und dem zweiten Frequenzband dimensioniert sind, sodass, bei jedem Spot-Gitter, die durch die erste Antenne erzeugten Spots im Wesentlichen diejenigen Spots überlagern, welche durch die zweite Antenne erzeugt werden.

8. Mehrstrahliges Antennensystem nach einem der Ansprüche 1 bis 5, wobei das System zwei Antennen umfasst, welche in der Lage sind, gleichermaßen im Empfangs-und im Sendebetrieb zu arbeiten, wobei die erste Antenne (601) konfiguriert ist, um den geographischen Bereich dem ersten Spot-Gitter entsprechend abzudecken, wobei die zweite Antenne (602) konfiguriert ist, um den geographischen Bereich dem zweiten Spot-Gitter entsprechend abzudecken.

9. Mehrstrahliges Antennensystem nach einem der vorhergehenden Ansprüche, wobei die Strahlelemente mindestens einer Antenne eine Öffnung quadratischer Form aufweisen, wobei die Strahlelemente ausgefluchtet und so platziert sind, dass ihre Ränder parallel zueinander sind.

10. Satellit, welcher ein Antennensystem nach einem der vorhergehenden Ansprüche umfasst.

11. Satellitenkommunikationssystem, umfassend mindestens zwei unterschiedliche Satelliten, wobei der erste Satellit die erste Antenne eines Antennensystems nach einem der Ansprüche 1 bis 9 umfasst, wobei ein zweiter Satellit die zweite Antenne des Antennensystems umfasst.

## Claims

1. Multi-beam antenna system configured to cover a geographical zone decomposed into a plurality of spots, the system comprising two antennas (501,503,502,504,601,602)for reception and/or for transmission, wherein the antennas are configured so as to cover the said zone with two grids of spots, each antenna comprising a plurality of radiating elements each producing a spot, **characterised in that** the radiating elements are arranged so that several spots of the first grid, that are generated by a first antenna (501,503,601), are aligned along two substantially orthogonal axes, so that points exist that are situated substantially equidistantly from the centres of four adjacent spots, several spots of the second grid, that are generated by the second antenna (502,504,602), being centred on the said points.

2. Multi-beam antenna system according to Claim 1, in which the spots of the first grid are substantially the same dimension as the spots of the second grid.

3. Multi-beam antenna system according to Claim 1, in which the spots (402) of the second grid have a radius at least equal to twice the radius of the spots of the first grid (401).

4. Multi-beam antenna system according to any of the preceding claims, the system comprising at least one reflector and each antenna comprising a plurality of radiating elements, in which at least one antenna is dimensioned such that a beam is produced by a single radiating element, and for a given reflector size, the size of the radiating elements is chosen less than the optimal size leading to maximum efficiency of the antenna, the said size being chosen so that the losses of energy by spillover of the reflector are greater than those obtained with the said optimal size, the said system comprising at least two adjacent radiating elements, the said size of the element being chosen so that a first radiating element, adjacent to a second radiating element of the said array, can generate a spot adjacent to the spot generated by the second radiating element.

5. Multi-beam antenna system according to Claim 4, in which the size of the radiating elements is such that the level of illumination on the edges of the reflector is in a ratio lying between -2dB and -4dB with respect to the maximum illumination level obtained on the reflector.

6. Multi-beam antenna system according to any of the preceding claims, the system comprising two pairs of antennas (501, 502, 503, 504), the antennas of the said first pair (503, 504) being able to operate in reception only and the antennas of the second pair (501, 502) being able to operate in transmission only, the first antenna (501, 503) of each pair being configured so as to cover the geographical zone according to the first grid of spots, the second antenna (502, 504) of each pair being configured so as to cover the said geographical zone according to the second grid of spots.

7. Multi-beam antenna system according to Claim 6, in which the antennas of the first pair (503, 504) are adapted for operating in a first frequency band, for example a few hundred MHz around 30 GHz, the antennas of the second pair (501, 502) being adapted for operating in a second frequency band distinct from the first band, for example a few hundred MHz around 20 GHz, the reflectors and the radiating elements of the antennas of the second pair being dimensioned substantially in proportion to the frequency ratio of the first frequency band to the second frequency band, in such a way that, for each of the grids of spots, the spots generated by the first antenna are substantially superimposed on those generated by the second antenna.

8. Multi-beam antenna system according to any of Claims 1 to 5, the system comprising two antennas each able to operate in reception and in transmission, the first antenna (601) being configured so as to cover the geographical zone according to the first grid of spots, the second antenna (602) being configured so as to cover the geographical zone according to the second grid of spots.

9. Multi-beam antenna system according to any one of the preceding claims, in which the aperture of the radiating elements of at least one antenna is of square shape, the said radiating elements being aligned and placed so that their edges are parallel to one another.

10. Satellite comprising an antenna system according to any of the preceding claims.

11. Satellite communication system comprising at least two distinct satellites, the first satellite comprising the said first antenna of an antenna system according to any of Claims 1 to 9, a second satellite comprising the said second antenna of the said antenna system.
